# EUROPÄISCHE PATENTSCHRIFT

(11) **EP 3 023 834 B1**
(45) Veröffentlichungstag und Bekanntmachung des Hinweises auf die Patenterteilung: **07.04.2021**
(21) Anmeldenummer: 15192527.8
(22) Anmeldetag: 02.11.2015
(51) Int. Cl.: G09F 23/00, G02F 1/13357, G02F 1/1333

(54) **BEDIENEINRICHTUNG FÜR EIN ELEKTROGERÄT UND ELEKTROGERÄT**
OPERATING DEVICE FOR AN ELECTRICAL DEVICE AND ELECTRICAL DEVICE
DISPOSITIF DE COMMANDE POUR UN APPAREIL ELECTRIQUE ET APPAREIL ELECTRIQUE

(30) Priorität: 18.11.2014 DE 102014223455
(43) Veröffentlichungstag der Anmeldung: 25.05.2016
(73) Patentinhaber: E.G.O. Elektro-Gerätebau GmbH, 75038 Oberderdingen (DE)
(72) Erfinder: Alvarez Raventos, Jordi, 75038 Oberderdingen (DE); Kümmerle, Hannes, 75038 Oberderdingen (DE); Schmidt, Kay, 75038 Flehingen (DE); Weiss, Steffen, 75059 Zaisenhausen (DE)
(74) Vertreter: Patentanwälte Ruff, Wilhelm, Beier, Dauster & Partner mbB

(56) Entgegenhaltungen:
- EP-A1- 0 009 249
- EP-A1- 2 111 779
- EP-A1- 2 849 172
- EP-A2- 0 841 521
- DE-A1- 10 011 433
- DE-A1-102010 062 428
- US-A1- 2009 262 085

## Beschreibung

### ANWENDUNGSGEBIET UND STAND DER TECHNIK

Die Erfindung betrifft eine Bedieneinrichtung für ein Elektrogerät mit einer Anzeigefläche sowie ein Elektrogerät mit einer solchen Bedieneinrichtung.

Ähnliche Bedieneinrichtungen sind aus der DE 102006005677 A1 und der EP 2849172 A1 bekannt. Bei der EP 2849172 A1 sind Bilder und/oder Symbole an der Bedieneinrichtung vorgesehen, die entsprechend dem Betriebszustand angezeigt werden können und einer Bedienperson bestimmte Informationen geben. Eine nochmals weitere Bedieneinrichtung für eine Kaffeemaschine als Elektrogerät ist aus der EP 2111779 A1 bekannt.

Aus der EP 009 249 A1 ist eine Bedieneinrichtung mit Anzeige für elektrische Geräte bekannt, bei der Programmwahlflächen als kapazitive Sensorflächen an einem LCD-Display angeordnet sind. Dahinter kann ein belegter oder beschrifteter flächiger Träger angeordnet sein, um einerseits gedruckte und andererseits elektrisch gesteuerte Anzeigen zu kombinieren.

Aus der DE 100 11 433 A1 ist ein Touchscreen mit Anzeige bekannt, beispielsweise für ein Mobiltelefon, der einen Schichtaufbau aufweist. Im Schichtaufbau sind optische Verschlusspixel gebildet, die einerseits transparent und andererseits intransparent sein können. Des Weiteren sind Hintergrundlichtpixel gebildet bzw. vorgesehen unterhalb der optischen Verschlusspixel, die zwischen einem hellen Zustand und einem dunklen Zustand hin und her geschaltet werden können. Eine Schaltfunktion des Touchscreen wird über ein Widerstandserfassungssystem oder ein Krafterfassungssystem erreicht, also durch Druck auf den Touchscreen samt Komprimierung aller darüberliegender Schichten.

Aus der US 2009/262085 A1 ist eine Bedieneinrichtung als Touchscreen mit Anzeige für mobile Geräte bekannt, die die Merkmale des Oberbegriffs des Anspruchs 1 aufweist. Sie weist eine allgemeine flächige Rückseitenbeleuchtung auf, auf der eine Maskenschicht aufgebracht ist, die Ausschnitte und Symbole aufweist. Diese Maskenschicht kann durchleuchtet werden, und die Ausschnitte bzw. Symbole sind dann sichtbar abhängig vom Zustand der optischen Verschlusspixel darüber.

### AUFGABE UND LÖSUNG

Der Erfindung liegt die Aufgabe zugrunde, eine eingangs genannte Bedieneinrichtung für ein Elektrogerät sowie ein entsprechendes Elektrogerät zu schaffen, mit denen Probleme des Standes der Technik vermieden werden können und es insbesondere möglich ist, Bilder und/oder Symbole auf vorteilhafte Art und Weise darzustellen sowie den Aufbau der Bedieneinrichtung einfach und montagefreundlich zu gestalten.

Gelöst wird diese Aufgabe durch eine Bedieneinrichtung mit den Merkmalen des Anspruchs 1 sowie durch ein mit einer solchen Bedieneinrichtung versehenes Elektrogerät mit den Merkmalen des Anspruchs 5. Vorteilhaft sowie bevorzugte Ausgestaltungen der Erfindung sind Gegenstand der weiteren Ansprüche und werden im Folgenden näher erläutert. Dabei werden manche der Merkmale nur für die Bedieneinrichtung oder nur für das Elektrogerät genannt und erläutert. Sie sollen jedoch unabhängig davon sowohl für die Bedieneinrichtung als auch für das Elektrogerät selbstständig gelten können. Der Wortlaut der Ansprüche wird durch ausdrückliche Bezugnahme zum Inhalt der Beschreibung gemacht.

Es ist vorgesehen, dass die Bedieneinrichtung für das Elektrogerät eine Anzeigefläche und ein LCD-Display für eine Bedienperson aufweist. So können Informationen angezeigt und abgelesen werden. Des Weiteren können Bedienelemente an der Anzeigefläche bzw. an der Bedieneinrichtung vorgesehen sein, mit denen das Elektrogerät bedient wird. Diese Bedienelemente sind vorteilhaft Berührungsschalter, besonders vorteilhaft kapazitive Berührungsschalter. Hierzu wird nachfolgend mehr ausgeführt.

Das LCD-Display nimmt einen Teil der Fläche bzw. vorteilhaft mindestens 50% der Fläche der Anzeigefläche ein. Dabei weist es mehrere aktive und einzeln ansteuerbare Bereiche auf. Dies bedeutet, dass in diesen aktiven und einzeln ansteuerbaren Bereichen ganze Flächenbereiche des LCD-Displays entweder hell oder dunkel sind, je nach Ansteuerung. Dies ist von LCD-Displays an sich bekannt, da sie, wie auch das erfindungsgemäße LCD-Display, eine Rückseitenbeleuchtung aufweisen bzw. hier eine Rückseitenbeleuchtung vorgesehen ist zur Durchleuchtung des LCD-Displays. Werden manche Bereiche dann durch Verändern der angelegten Spannung dunkel gemacht, erscheinen sie vor dem ansonsten durchleuchteten und somit hellen LCD-Display als dunkle Fläche, dunkler Strich oder dunkles Symbol. In diesen verdunkelten Bereichen des LCD-Displays erfolgt dann keine Durchleuchtung mehr.

Des Weiteren weist die Bedieneinrichtung einen lichtdurchlässigen Bildträger mit Bildern und/oder Symbolen daran auf. Dieser Bildträger bzw. diese Bilder und/oder Symbole sind hinter den LCD-Anzeigen und vor der Rückseitenbeleuchtung angeordnet. Ist das LCD-Display in einem aktiven Bereich, der von der Größe her einem solchen Bild und/oder Symbol entspricht, verdunkelt, so kann man erfindungsgemäß von dem Bild und/oder Symbol trotz Rückseitenbeleuchtung nichts sehen. Wird das LCD-Display in diesem aktiven Bereich durchsichtig, so ist das Bild und/oder Symbol nicht nur von vorne her zu erkennen, sondern wird auch noch von der Rückseitenbeleuchtung durchleuchtet und ist somit besonders gut sichtbar.

Die Bedieneinrichtung weist durchsichtige kapazitive Sensorelemente auf, die kapazitive Berührschalter bilden als Bedienelemente an der Anzeigefläche. Dabei können die kapazitiven Sensorelemente auf oder vor dem LCD-Display angeordnet sein, besonders vorteilhaft auf dessen Vorderseite. Sie können aus einem durchsichtigen elektrisch leitfähigen Material bestehen, beispielsweise ITO, und auf die Vorderseite des LCD-Displays aufgedruckt sein oder sonstwie aufgebracht sein. Alternativ können sie auf eine Fläche vor dem LCD-Display und getrennt davon aufgebracht sein, beispielsweise eine Anzeigefläche, vorteilhaft auf deren Unterseite.

Erfindungsgemäß sind die Bilder und/oder Symbole dauerhaft und unlösbar auf eine Druckfläche gedruckt, wobei diese Druckfläche oder das Bauteil mit dieser Druckfläche dann den Bildträger bildet.

Gemäß der Erfindung ist die Druckfläche auf einer transluzenten Diffusorfolie vorgesehen, die vor der Rückseitenbeleuchtung angeordnet ist bzw. zwischen Rückseitenbeleuchtung und LCD-Display. Sie ist vorzugsweise so groß wie die beiden Teile und dient dazu, das Licht der Rückseitenbeleuchtung noch einmal zu vergleichmäßigen für eine möglichst gleichmäßige Durchleuchtung des LCD-Displays. Diese Diffusorfolie ist der Bildträger. Auch auf eine solche aus Kunststoff bestehende Diffusorfolie kann sehr gut ein direkter Druck von Bildern und/oder Symbolen erfolgen.

Somit werden die Bilder und/oder Symbole, die durchleuchtet dargestellt werden sollen, auf ein ohnehin als Diffusorfolie vorhandenes Bauteil aufgedruckt. Damit lässt sich ein eigener aufwendiger Bildträger einsparen in der Herstellung. Des Weiteren ist die Montage einfacher, weil ein Teil weniger montiert werden muss, nämlich kein Bildträger, der nur Bildträger ist und keine weitere Funktion aufweist.

In Ausgestaltung der Erfindung kann vorgesehen sein, dass die aktiven Bereiche des LCD-Displays entsprechend einem Muster mit durchschnittlichen Größen von Musterflächen eines Musterfeldes angeordnet sind. So lassen sich standardisierte LCD-Displays verwenden, mit denen unterschiedliche, aber im Wesentlichen gleich große oder von der Art und Anordnung her gleiche Bilder und/oder Symbole darstellen lassen. Vorteilhaft sind aber nicht alle Bereiche des LCD-Displays nur zur Darstellung solcher Bilder und/oder Symbole ausgebildet, sondern auch zur ansonsten üblichen Darstellung von Informationen und Anzeigen, wie man es von Bedieneinrichtungen kennt. Es können mindestens zwei der aktiven Bereiche jeweils zwischen zwei und fünf solcher Musterflächen aufweisen. In anderen aktiven Bereichen kann dann eine übliche Darstellung von Informationen durch das LCD-Display selbst erfolgen, während das LCD-Display ansonsten für die dahinter angeordneten und durchleuchteten Bilder und/oder Symbole nur die erfindungsgemäße Blendenfunktion hat.

Bei der Erfindung erzeugt die Rückseitenbeleuchtung eine gleichmäßige und gleichverteilte Beleuchtung an ihrer Vorderseite mit der vorgenannten Diffusorfolie.

Eine vorteilhafte Rückseitenbeleuchtung weist LED als Beleuchtungsmittel auf. Da diese aber eher kleine bzw. punktförmige Lichtquellen darstellen, ist im Rahmen der Erfindung eine flächige Diffusoreinrichtung vor diesen LED oder vor der Rückseitenbeleuchtung angeordnet, und zwar als vorgenannte transluzente Diffusorfolie.

Des Weiteren hat es sich im Rahmen der Erfindung als vorteilhaft herausgestellt, wenn das LCD-Display ein sogenanntes negatives LCD-Display ist. Dabei sind die aktiven Bereiche in einem Ruhezustand ohne Betriebsspannung schwarz bzw. dunkel. Sie können also von der Rückseitenbeleuchtung nicht durchleuchtet werden, und hinter diesen Bereichen angeordnete Bilder und/oder Symbole sind dann für eine Bedienperson nicht sichtbar. Auf das vorherige Beispiel bezogen ist die durch das LCD-Display gebildete Blende sozusagen geschlossen. In einem Betriebszustand mit angelegter Betriebsspannung ist das negative LCD-Display durchscheinend oder durchsichtig. Dann durchleuchtet die Rückseitenbeleuchtung nicht nur das Bild und/oder Symbol, sondern auch das quasi durchsichtige LCD-Display, so dass eine Bedienperson von vorne die durchleuchteten Bilder und/oder Symbole sehr gut erkennen kann.

Das Bedrucken des Bildträgers, also das Aufbringen der Bilder und/oder Symbole, kann auf je nach Unterlage geeignete Art und Weise erfolgen. Grundsätzliche Möglichkeiten sind Siebdruck oder auch Inkjet-Verfahren, selbst für starre Bildträger aus Glas oder aus anderen unflexiblen Materialien.

In Ausgestaltung der Erfindung kann der Bildträger nur einen Teil des LCD-Displays überdecken. Vorteilhaft sind dies mehr als 50%, beispielsweise bis zu 75%. Der übrige Teil des LCD-Displays kann dann mit LCD-Symbolen versehen sein wie zuvor erläutert bzw. auf übliche Art und Weise LCD-Symbole wie beliebig veränderbaren Symbole, Zahlen oder anderes darstellen.

Alternativ kann der Bildträger das gesamte LCD-Display bedecken, so dass es keine beliebig veränderbaren Symbole, Zahlen oder anderes darstellen kann, sondern nur eines oder mehrere der gedruckten Bilder und/oder Symbole.

Vorteilhaft ist das Elektrogerät, das eine solche erfindungsgemäße Bedieneinrichtung aufweist, ein Verkaufsautomat, eine Waschmaschine, ein Wäschetrockner, ein Geschirrspüler, ein Kühlschrank, ein Ofen, ein Kochfeld oder eine Kaffeemaschine. Hier können mit den Bildern und/oder Symbolen mehrere Bedienmöglichkeiten oder mehrere Optionen angezeigt werden, was als besonders vorteilhaft angesehen wird.

Insgesamt ist es mit der Erfindung möglich, auf einfach Art und Weise eine Bedieneinrichtung mit einer Anzeigefläche bzw. einer beleuchteten Anzeige zu schaffen, die nicht nur auf relativ einfache Art und Weise gut erkennbare Bilder und/oder Symbole anzeigen kann. Besonders vorteilhaft ist hier eben, dass selbst farbige Bilder und/oder Symbole durch das Aufdrucken angezeigt werden können bzw. dargestellt werden können, ohne dass diese von der Darstellung her besonderen Aufwand verursachen. Solchermaßen gedruckte Bilder und/oder Symbole können in besserer und feiner aufgelöster Qualität dargestellt werden als mit einem ansonsten möglichen aktiven Pixel-Display, beispielsweise als TFT-Display.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Explosionsdarstellung der Bestandteile einer nicht zur Erfindung gehörenden Bedieneinrichtung mit einem LCD-Display und Bildern, die auf eine Vorderseite einer Rückseitenbeleuchtung aufgedruckt sind,
- Fig. 2: die Bedieneinrichtung aus Fig. 1 in einer Darstellung der Einzelteile näher beieinander, um den Schichtaufbau zu zeigen,
- Fig. 3 bis 6: Abwandlungen der Bedieneinrichtung aus der Fig. 1 in ähnlicher Darstellung, wobei die Bilder erfindungsgemäß auf eine Diffusorfolie oder nicht erfindungsgemäß auf die Rückseite des LCD-Displays aufgedruckt sind,
- Fig. 7: eine Schnittdarstellung der Bedieneinrichtung aus Fig. 2 unter einer Bedienfläche eines Elektrogeräts und
- Fig. 8: eine Kaffeemaschine als ein erfindungsgemäßes Elektrogerät mit einer Anzeige mit der erfindungsgemäßen Bedieneinrichtung.

### DETAILLIERTE BESCHREIBUNG DER AUSFÜHRUNGSBEISPIELE

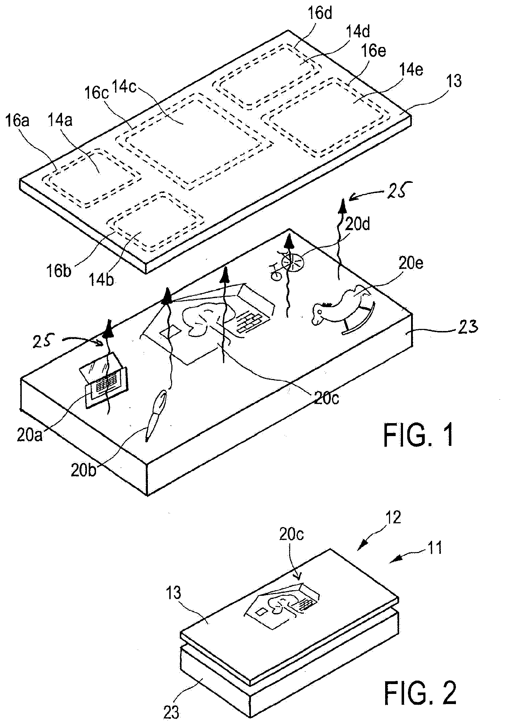

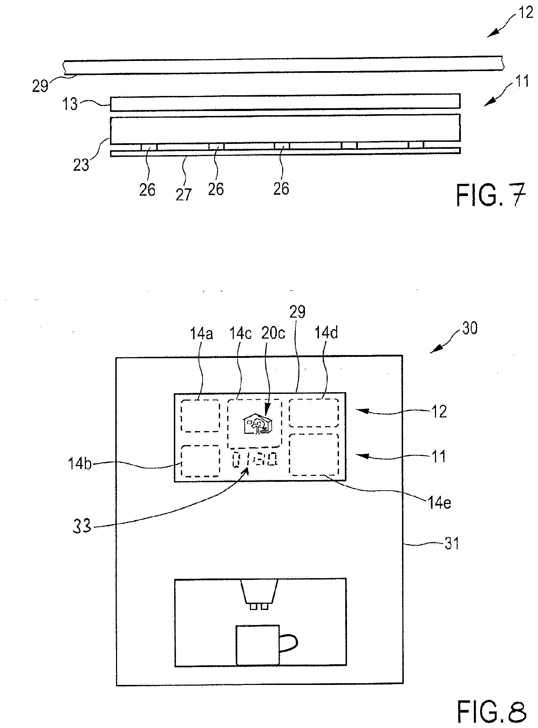

Die Fig. 1 zeigt eine nicht erfindungsgemäße Bedieneinrichtung 11 in Explosionsdarstellung, die eine Anzeigefläche 12 gemäß der Fig. 7 aufweist. Ein LCD-Display 13, in diesem Fall ein sogenanntes negatives LCD-Display, ist in flacher und rechteckiger Form vorgesehen. Das LCD-Display könnte auch gebogen oder teilweise gewölbt sein. Das LCD-Display 13 weist mehrere aktive Bereiche 14a bis 14e mit der Verteilung gemäß Fig. 1 auf. Die aktiven Bereiche 14a und 14b auf der linken Seite sind im Wesentlichen quadratisch und weisen ähnliche oder gleiche Größe auf. Der mittlere aktive Bereich 14c ist relativ groß. Auf der rechten Seite sind zwei unterschiedlich groß ausgebildete rechteckige aktive Bereiche 14d und 14e vorgesehen. Diese aktiven Bereiche 14a bis 14e können jeweils bei entsprechender Ansteuerung entweder dunkel oder durchsichtig sein. Da das LCD-Display 13 ein sogenanntes negatives LCD-Display ist, ist es im deaktivierten Zustand bzw. ohne Betriebsspannung schwarz und undurchsichtig. Die aktiven Bereiche 14a bis 14e können durch Anlegen einer üblichen Betriebsspannung durchsichtig werden, so kann entsprechend der vorgenannten Blenden-Funktion des LCD-Displays jeder der aktiven Bereiche 14a bis 14e einzeln und nach Bedarf sozusagen durchsichtig gemacht werden, um dahinterliegende Bilder und/oder Symbole erkennen zu können. Hier nimmt das LCD-Display 13 den größten Teil der Fläche der Anzeigefläche 12 ein, es könnte aber auch weniger sein.

Auf der Oberseite des LCD-Displays 13 oder davor sind flächige kapazitive Sensorelemente 16a bis 16e vorgesehen, die ebenfalls strichliert dargestellt sind. Sie sind etwas größer ausgebildet als die aktiven Bereiche 14a bis 14e und können durch Beschichten mit lichtdurchlässigem Material wie beispielsweise ITO hergestellt werden. Dabei kann diese Beschichtung direkt auf die Oberseite des LCD-Displays 13 aufgebracht werden, alternativ auf eine separate bzw. zusätzliche Fläche vor dem LCD-Display 13. Die kapazitiven Sensorelemente 16a bis 16e sind auf nicht dargestellte Art und Weise mit einer Steuerung verbunden, die vorteilhaft auch das LCD-Display 13 oder ein ganzes Elektrogerät steuert. Die kapazitiven Sensorelemente 16a bis 16e bilden Berührungsschalter als Bedienelemente, und zwar kapazitive Berührungsschalter, für die Bedieneinrichtung 11 oder ein Elektrogerät, das mit der Bedieneinrichtung ausgestattet ist. Diesbezüglich wird auf die vorgenannte EP 2111779 A1 verwiesen sowie hier auf die Fig. 8, die später noch erläutert wird. Das Berühren kann auf der Vorderseite der Anzeigefläche 12 erfolgen bzw. hier kann ein Finger aufgelegt werden.

Unterhalb des LCD-Displays 13 ist eine Rückseitenbeleuchtung 23 angeordnet. Diese ist wie üblich ausgebildet und kann an ihrer Oberseite bzw. Vorderseite vorgenanntes Diffusormaterial aufweisen oder Diffusoreigenschaften aufweisen. Licht 25, das von der Rückseitenbeleuchtung ausgesendet wird, ist weitgehend gleich verteilt und bewirkt eine gleichmäßige Beleuchtung bzw. Rückseitenbeleuchtung.

Auf die Oberseite bzw. Vorderseite der Rückseitenbeleuchtung 23 sind mehrere Bilder 20a bis 20e aufgebracht, und zwar direkt aufgedruckt. Diese Bilder 20a bis 20e haben unterschiedliche Bedeutungen bzw. verdeutlichen unterschiedliche Funktionen. Ihre Anordnung entspricht derjenigen der aktiven Bereiche 14a bis 14e, so dass jedes der Bilder 20a bis 20e einzeln sichtbar gemacht werden kann oder eben unsichtbar gemacht werden kann, abhängig vom Aktivierungszustand der aktiven Bereiche 14a bis 14e. Die Rückseitenbeleuchtung 23 selbst sollte stets bei aktivem Betrieb des zugehörigen Elektrogeräts aktiviert sein.

Für die aktiven Bereiche 14a bis 14e kann vorteilhaft vorgesehen sein, dass sie sich direkt berühren bzw. keinen Abstand zueinander aufweisen. Dann kann unter Umständen auch eine lückenlose Bedeckung der Rückseitenbeleuchtung 23 erreicht werden.

Das Licht 25 von der Rückseitenbeleuchtung bewirkt eine deutliche und gut sichtbare Durchleuchtung der Bilder 20a bis 20e, wenn die entsprechenden aktiven Bereiche 14a bis 14e darüber aktiviert sind und durchsichtig werden. Das Licht 25 kann im Übrigen vorteilhaft weißes Licht sein, es kann jedoch auch farbiges Licht sein. Vor allem wird natürlich durch die Bilder 20a bis 20e bzw. durch die Bedruckung zu ihrer Herstellung auf die Rückseitenbeleuchtung 23 direkt ein Farbeffekt bewirkt. Als Druckverfahren kann eines der vorgenannten verwendet werden, vorteilhaft Siebdruck oder Inkjet-Verfahren.

Aus der Fig. 2 ist zu ersehen, dass die Bedieneinrichtung 11 im Wesentlichen die Größe einer üblichen Bedieneinrichtung mit hinterleuchtetem LCD-Display aufweist. Im Zustand gemäß der Fig. 2 ist nur das mittlere große Bild 20c sichtbar, indem der aktive Bereich 14c darüber durchsichtig gemacht wurde. Aufgrund der Durchleuchtung mittels der Rückseitenbeleuchtung 23 ist das Bild 20c beleuchtet und sehr gut bzw. sozusagen brillant leuchtend erkennbar. Die anderen aktiven Bereiche 14 sind hier deaktiviert und somit verdunkelt, so dass die anderen Bilder 20 nicht sichtbar sind.

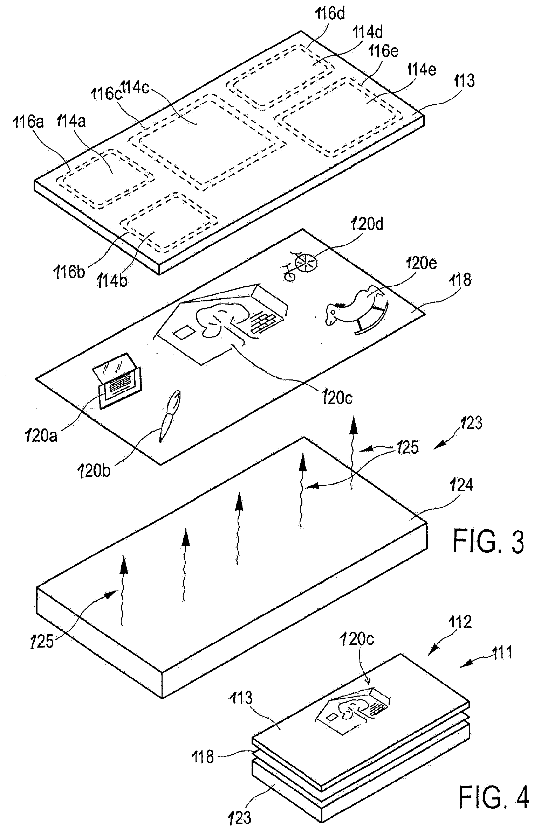

In der Fig. 3 ist die Erfindung dargestellt mit einem LCD-Display 113, welches weitgehend demjenigen aus der Fig. 1 entspricht, also auch aktive Bereich 114a bis 114e aufweist. Diese werden überdeckt von kapazitiven Sensorelementen 116a bis 116e.

Unter dem LCD-Display 113 ist hier eine Diffusorfolie 118 angeordnet, evtl. zusätzlich zu Diffusoreigenschaften an der Vorderseite der Rückseitenbeleuchtung 124. Diese Diffusorfolie 118 weist übliche Eigenschaften einer solchen Diffusorfolie auf, ist also transluzent bzw. vergleichmäßigt durch sie hindurchgestrahltes Licht für eine gleichmäßige Leuchterscheinung bzw. Durchleuchtung des LCD-Displays 113. Auf der Oberseite der Diffusorfolie, alternativ auch an ihrer Unterseite, sind ähnlich wie in der Fig. 1 Bilder 120a bis 120e vorgesehen bzw. aufgedruckt. Ein Druckverfahren kann demjenigen der vorgenannten Figuren entsprechen, abhängig davon, welches für die verwendete Diffusorfolie 118 am besten geeignet ist.

Unter der Diffusorfolie 118 ist eine Rückseitenbeleuchtung 123 vorgesehen, die Licht 125 flächig abstrahlt. Dies kann, da die Bilder 120 auf die Diffusorfolie 118 aufgedruckt sind, eine völlig übliche Rückseitenbeleuchtung 123 sein.

In der entsprechenden Fig. 4 ist zu erkennen, wie die Diffusorfolie 118 zwischen LCD-Display 113 und Rückseitenbeleuchtung 123 angeordnet ist. Die Bilder darauf sind nicht direkt zu erkennen, aber in der Durchleuchtung ist das Bild 120c gut zu erkennen.

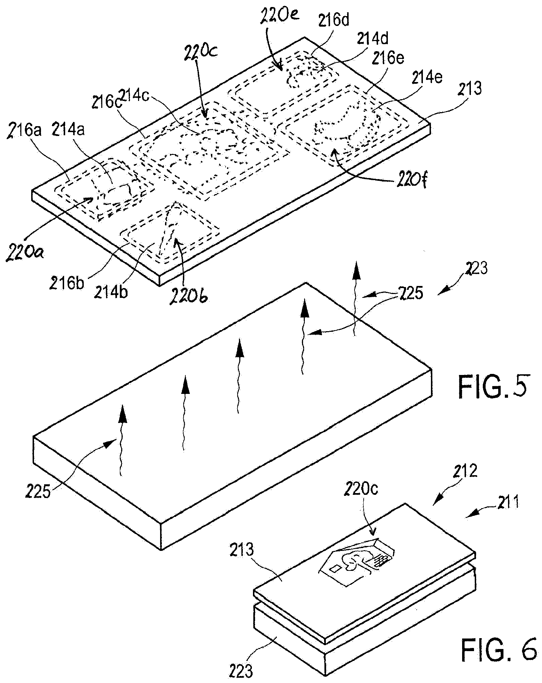

Eine nochmals weitere alternative Ausgestaltung, die nicht zur Erfindung gehört, ist in den Figuren 5 und 6 dargestellt. Das LCD-Display 213 mit den aktiven Bereichen 214a bis 214e und den kapazitiven Sensorelementen 216a bis 216e, die vorteilhaft an seiner Oberseite angeordnet sind, ist im Prinzip ausgebildet wie zuvor beschrieben. Hier sind die Bilder, wie durch die Strichlierung im Vergleich zu den Figuren 1 und 3 angedeutet ist, als Bilder 220a bis 220e an die Unterseite bzw. Rückseite des LCD-Displays 213 aufgedruckt, und zwar mit einem für dieses Material geeigneten Druckverfahren.

Auch hier ist eine Rückseitenbeleuchtung 223 vorgesehen, die genau wie diejenige aus der Fig. 1 ausgebildet ist und Licht 225 aussendet zur Durchleuchtung des LCD-Displays 213. In der Fig. 6 ist dann die Zusammenschichtung der Bedieneinrichtung 211 dargestellt, die ähnlich wie die Bedieneinrichtung 11 aus den Fig. 1 und 2 eben nur aus zwei Bauteilen besteht und nicht aus drei. Eine Diffusorwirkung kann hier durch eine entsprechende Oberflächenbehandlung der Rückseitenbeleuchtung 223 erreicht werden, falls dies erforderlich sein sollte.

Die Fig. 7 zeigt eine Bedieneinrichtung 11, die unterhalb einer zusätzlichen Abdeckung 29 montiert ist, und die somit hier eine Anzeigefläche 12 bildet, und zwar gemäß der Fig. 1 und 2. Die Abdeckung 29 ist auch transparent bzw. lichtdurchlässig und kann aus Glas oder entsprechend ausgebildetem Kunststoff bestehen. In der hier dargestellten Seitenansicht mit auseinandergezogenen Bauteilen, die im Einbauzustand vorteilhaft aneinander anliegen, ist zu ersehen, dass unter dem LCD-Display 13 die Rückseitenbeleuchtung 23 mit mehreren LED 26 versehen ist. Die LED 26 sind unterhalb von der Rückseitenbeleuchtung 23 auf einer Leiterplatte 27 oder einem ähnlichen Bauteilträger angeordnet. In einer anderen Ausgestaltung der Rückseitenbeleuchtung 23 können Lichtquellen wie beispielsweise die LED darin integriert sein.

Zwischen der Abdeckung 29 und dem LCD-Display 13 kann ein Träger mit den kapazitiven Sensorelementen 16a bis 16e darauf vorgesehen sein, beispielsweise in Form einer durchsichtigen Folie. Sie kann an der Unterseite der Abdeckung befestigt sein, alternativ oben auf dem LCD-Display 13 aufliegen.

Die Fig. 8 zeigt eine Kaffeemaschine 30 als vorteilhaftes Elektrogerät gemäß der Erfindung. Die Kaffeemaschine 30 weist ein Gehäuse 31 auf, das gemäß dem Stand der Technik ausgebildet ist. Im oberen Bereich der Vorderseite ist eine Bedieneinrichtung 11 als Anzeigefläche 12 vorgesehen hinter einer durchsichtigen Abdeckung 29, welche in das Gehäuse 31 integriert ist oder einen Teil davon bildet. Die Abdeckung 29 ist aber nicht zwingend, das LCD-Display selbst kann die Oberfläche bilden und dann direkt von einem Finger berührbar sein. Da die kapazitiven Sensorelemente, wie zuvor beschrieben, als Berührungsschalter integriert sind, kann die Kaffeemaschine 30 durch Berührung eines der beleuchteten bzw. hinterleuchteten Bilder oder Symbole der Bedieneinrichtung 11 mit dem Finger bedient werden. Im hier dargestellten Beispiel wird das Bild 20c des aktiven Bereichs 14c durchleuchtet, so dass eine Bedienperson den Finger darüber auflegen kann auf die Abdeckung 29 zur Auswahl und Auslösung der entsprechenden Funktion.

Unterhalb von dem Bild 20c ist eine weitere Anzeige 33 als Zeitanzeige dargestellt, beispielsweise für eine Uhrzeit oder eine Timer-Funktion. Sie zeigt hier eine Zeit "01:30" an. Hier ist die Anzeige 33 nach Art einer sogenannten Sieben-Segment-Anzeige dargestellt. Wenn das LCD-Display eine höhere Auflösung hat kann dies auch anders oder in detaillierter Form dargestellt werden.

In ähnlicher Form kann das Elektrogerät mit der erfindungsgemäßen Bedieneinrichtung auch ein Verkaufsautomat, eine Waschmaschine, ein Wäschetrockner, ein Geschirrspüler, ein Kühlschrank, ein Ofen oder ein Kochfeld sein.

## Patentansprüche

1. Bedieneinrichtung (111) für ein Elektrogerät (30), wobei die Bedieneinrichtung eine Anzeigefläche (112) und ein LCD-Display (113) aufweist für eine Bedienpersor zum Anzeigen und Ablesen von Informationen und/oder zur Bedienung des Elektrogeräts mit Bedienelementen (116) an der Anzeigefläche, wobe
- das LCD-Display (113) einen Teil der Fläche der Anzeigefläche einnimmt
- das LCD-Display mehrere aktive und einzeln ansteuerbare Bereiche (114) aufweist,
- hinter dem LCD-Display eine Rückseitenbeleuchtung (123) vorgesehen ist zur Durchleuchtung des LCD-Displays,
- die Bedieneinrichtung (111) einen lichtdurchlässigen Bildträger (118) mit Bildern (120) und/oder Symbolen daran aufweist
- durchsichtige kapazitive Sensorelemente (116) für Berührschalter als Bedienelemente an der Anzeigefläche (112) vorgesehen sind
- die kapazitiven Sensorelemente (116) auf oder vor dem LCD-Display (113) angeordnet sind,
- das LCD-Display (113) einen aktiven Bereich (114) aufweist, der von der Größe her einem solchen Bild (120) und/oder Symbol entspricht, damit als Blendenfunktion im verdunkelten Zustand des aktiven Bereichs von dem dahinter angeordneten Bild und/oder Symbol trotz Rückseitenbeleuchtung (123) nichts zu sehen ist, weil keine Durchleuchtung des LCD-Displays erfolgt,
- im durchsichtigen Zustand des aktiven Bereichs (114) das Bild (120) und/oder Symbol sichtbar ist, weil es von der Rückseitenbeleuchtung (123) durchleuchtet wird,
- die Rückseitenbeleuchtung (123) eine gleichmäßige und gleich verteilte Beleuchtung an ihrer Vorderseite erzeugt, **dadurch gekennzeichnet, dass**
- die Rückseitenbeleuchtung (123) eine flächige Diffusoreinrichtung (118) aufweist,
- die Bilder (120) und/oder Symbole dauerhaft und unlösbar auf eine Druckfläche gedruckt sind,
- die Druckfläche auf einer transluzenten Diffusorfolie (118) als Bildträger vorgesehen ist, wobei die transluzente Diffusorfolie vor der Rückseitenbeleuchtung (123) angeordnet ist und die flächige Diffusoreinrichtung (118) bildet.

2. Bedieneinrichtung nach Anspruch 1, **dadurch gekennzeichnet, dass** die Rückseitenbeleuchtung (123) LED als Beleuchtungsmittel aufweist

3. Bedieneinrichtung nach einem der Ansprüche 1 oder 2, **dadurch gekennzeichnet, dass** das LCD-Display (113) ein negatives LCD-Display ist, wobei die aktiven Bereiche (114)
- in einem Ruhezustand ohne Betriebsspannung schwarz oder dunkel sind und
- in einem Betriebszustand mit Betriebsspannung durchscheinend oder durchsichtig sind.

4. Bedieneinrichtung nach einem der vorhergehenden Ansprüche, **dadurch gekennzeichnet, dass** die kapazitiven Sensorelemente (116) auf einer Vorderseite des LCD-Displays (113) angeordnet sind.

5. Elektrogerät (30), **dadurch gekennzeichnet, dass** es eine Bedieneinrichtung (111) nach einem der vorhergehenden Ansprüche aufweist.

6. Elektrogerät nach Anspruch 5, **dadurch gekennzeichnet, dass** das Elektrogerät aus der folgenden Gruppe ausgewählt ist: Verkaufsautomat, Waschmaschine, Wäschetrockner, Geschirrspüler, Kühlschrank, Ofen, Kochfeld, Kaffeemaschine (30).

## Claims

1. Operating device (111) for an electrical appliance (30), wherein the operating device includes a display area (112) and a LCD display (113) for an operator to display and read off information and/or for operating the electrical appliance using operating elements (116) on the display area, wherein
- the LCD display (113) occupies a part of the surface of the display area,
- the LCD display has multiple active and individually controllable regions (114),
- a backlight (123) is provided behind the LCD display for shining through the LCD display,
- the operating device (111) has a translucent image carrier (118) with images (120) and/or symbols thereon,
- transparent capacitive sensor elements (116) for touch switches as operating elements are provided on the display area (112),
- the capacitive sensor elements (116) are disposed on or in front of the LCD display (113),
- the LCD display (113) has an active region (114) corresponding in size to such an image (120) and/or symbol, in order to obscure the image and/or symbol located behind, as an aperture functionality in the darkened condition of the active region in spite of the backlight (123), since there is no shining through the LCD display,
- in the transparent condition of the active region (114) the image (120) and/or symbol is visible, since the backlight (123) is shining through,
- the backlight (123) generates an even and uniformly distributed illumination on the front side thereof,
**characterized in that**
- the backlight (123) includes a planar diffusor device (118),
- the images (120) and/or symbols are permanently and unremovably printed onto a printing surface,
- the printing surface is provided on a translucent diffusor film (118) as image carrier, wherein the translucent diffusor film is disposed in front of the backlight (123) and forms the planar diffusor device (118).

2. Operating device according to claim 1, **characterized in that** the backlight (123) includes LED as illuminating means.

3. Operating device according to claim 1 or 2, **characterized in that** the LCD display (113) is a negative LCD display, wherein the active regions (114)
- are black or dark in an idle state without operating voltage, and
- are translucent or transparent in an operating state with operating voltage.

4. Operating device according to any of the preceding claims, **characterized in that** the capacitive sensor elements (116) are disposed on a front side of the LCD display (113).

5. Electrical appliance (30), **characterized in that** it includes an operating device (111) according to any of the preceding claims.

6. Electrical appliance according to claim 5, **characterized in that** the electrical appliance is selected from the following group of: vending machine, washing machine, tumble dryer, dishwasher, refrigerator, oven, cooktop, coffee machine (30).

## Revendications

1. Dispositif de commande (111) destiné à un dispositif électrique (30), le dispositif de commande comportant une surface d'affichage (112) et un écran LCD (113) permettant à un opérateur d'afficher et de lire des informations et/ou de faire fonctionner le dispositif électrique avec des éléments de commande (116) sur la surface d'affichage,
- l'écran LCD (113) occupant une partie de la surface d'affichage,
- l'écran LCD comportant une pluralité de zones (114) actives et commandables individuellement,
- un moyen de rétro-éclairage (123) étant prévu derrière l'écran LCD pour éclairer l'écran LCD,
- le dispositif de commande (111) comportant un support d'image translucide (118) sur lequel sont placés des images (120) et/ou des symboles,
- des éléments de détection capacitifs transparents (116) destinés à des commutateurs tactiles étant prévus comme éléments de commande sur la surface d'affichage (112),
- les éléments de détection capacitifs (116) étant disposés sur ou devant l'écran LCD (113),
- l'écran LCD (113) comportant une zone active (114) dont la dimension correspond à celle d'une image (120) et/ou d'un symbole de manière à ce que rien ne peut être vu, en tant que fonction de masquage, lorsque la zone active est assombrie, depuis l'image et/ou le symbole disposé derrière en dépit du moyen de rétro-éclairage (123) car l'écran LCD n'est pas éclairé,
- l'image (120) et/ou le symbole étant visibles lorsque la zone active (114) est transparente, car ils sont éclairés par le moyen de rétro-éclairage (123),
- le moyen de rétro-éclairage (123) générant un éclairage uniforme et uniformément réparti sur sa face avant,
**caractérisé en ce que**
- le moyen de rétro-éclairage (123) comporte un dispositif de diffusion plat (118),
- les images (120) et/ou les symboles sont imprimés de façon permanente et non détachable sur une surface d'impression,
- la surface d'impression est prévue sur un film de diffusion translucide (118) en tant que support d'image, le film de diffusion translucide étant disposé devant le moyen de rétro-éclairage (123) et formant le dispositif de diffusion plat (118).

2. Dispositif de commande selon la revendication 1, **caractérisé en ce que** le moyen de rétro-éclairage (123) comporte des LED comme moyens d'éclairage.

3. Dispositif de commande selon l'une des revendications 1 et 2, **caractérisé en ce que** l'écran LCD (113) est un écran LCD négatif, les zones actives (114)
- étant noires ou sombres dans un état de repos sans tension de fonctionnement et
- étant translucides ou transparentes dans un état de fonctionnement avec tension de fonctionnement.

4. Dispositif de commande selon l'une des revendications précédentes, **caractérisé en ce que** les éléments de détection capacitifs (116) sont disposés sur une face avant de l'écran LCD (113).

5. Appareil électrique (30), **caractérisé en ce qu'**il comporte un dispositif de commande (111) selon l'une des revendications précédentes.

6. Appareil électrique selon la revendication 5, **caractérisé en ce que** l'appareil électrique est choisi dans le groupe suivant: distributeur automatique, lave-linge, sèche-linge, lave-vaisselle, réfrigérateur, four, plaque de cuisson, cafetière électrique (30).
